# EUROPEAN PATENT SPECIFICATION

(11) **EP 3 618 171 B1**
(45) Date of publication and mention of the grant of the patent: **24.02.2021**
(21) Application number: 18191835.0
(22) Date of filing: 30.08.2018
(51) Int. Cl.: H01M 10/625, H01M 10/615, H01M 10/653, H01M 10/647, H01M 10/6567, H01M 10/6555, H01M 10/643, H01M 10/613, H01M 10/658, H01M 2/10, B60L 3/00, B60L 50/64, B60L 58/26, B60L 58/27, H01M 2/20

(54) **THERMALLY DECOUPLED BATTERY CELL GROUPS**
THERMISCH ENTKOPPELTE BATTERIEZELLENGRUPPEN
GROUPES DE CELLULES DE BATTERIE THERMIQUEMENT DÉCOUPLÉES

(43) Date of publication of application: 04.03.2020
(73) Proprietor: ABB Schweiz AG, 5400 Baden (CH)
(72) Inventor: Traub, Felix, 5413 Birmenstorf (CH); Wicki, Stefan, 5702 Niederlenz (CH)
(74) Representative: Qip Patentanwälte Dr. Kuehn & Partner mbB

(56) References cited:
- WO-A1-2017/004078
- US-A1- 2006 134 514
- US-A1- 2016 301 045

## Description

### FIELD OF THE INVENTION

The invention relates to the field of packaging of battery cells. In particular, the invention relates to a battery cell assembly.

### BACKGROUND OF THE INVENTION

Electric vehicles, such as electric railway vehicles, electric busses and electric cars, may be equipped with a battery storage system, which stores the energy necessary for driving the vehicle and/or auxiliary functions, such as operating the air conditioning. The energy and power of a single battery cell is often too low for practical applications. Battery cells usually need to be connected in series and/or in parallel in order to increase the voltage and/or the current of the battery storage system and, thus, in order to increase the energy and power of the battery storage system.

However, a parallel connection of battery cells may be complicated by the fact that the internal resistance of a battery cell decreases strongly with increasing temperature. By consequence, losses in parallel-connected battery cells may be distributed very unevenly: As soon as one battery cell becomes hotter, its internal resistance decreases and, thus, current shifts from the colder to the hotter battery cell. In this way, the losses in the hotter battery cell increase even further and the battery cell becomes even hotter in turn.

CN 104014491 A considers a matching of parameters of parallel connected battery cells.

US 2013 0 115 506 A1 describes a thermal contact between neighboring stacks of prismatic lithium ion cells by using graphite heat spreader with good thermal conductivity only in lateral direction.

US 2006 0 134 514 A1 refers to a method for transporting heat from the middle of a battery assembly using sheets with good lateral and bad normal conductivity.

DE 10 2012 112 294 A1 shows pouch cells arranged next to each other, with graphite sheets between them in order to thermally insulate neighboring cells and have good heat conduction to an external heat sink.

### DESCRIPTION OF THE INVENTION

It is an objective of the invention to provide a battery cell assembly with a long lifetime.

This objective is achieved by the subject-matter of the independent claims. Further exemplary embodiments are evident from the dependent claims and the following description.

The invention relates to a battery cell assembly. The battery cell assembly or battery model may be used in a battery energy storage system, in particular in a battery storage system for high-power applications, such as transportation or power quality. The battery cell assembly may be integrated into an electric car, an electric bus, an electric tram and/or an electric railway vehicle.

According to an embodiment of the invention, the battery cell assembly comprises a plurality of mechanically interconnected battery cells. A battery cell may be a device, which comprises a housing, in which chemicals, such as Li-ion chemistries, and components for electrochemical storing energy are arranged. The battery cells may be Li-ion battery cells.

The housing or parts thereof also may provide electric contacts for electrically interconnecting the battery cell with electrical conductors.

The housings of the battery cells also may be mechanically interconnected with each other. For example, the battery cells all may be attached to a common frame, which supports the battery cells.

The battery cells of the battery cell assembly may have a prismatic housing, i.e. may be prismatic cells. A prismatic cell may have 6 substantially flat housing surfaces. A prismatic cell may have its electrical contacts on one side.

The battery cells of the battery cell assembly may have a cylindrical housing, i.e. may be cylindrical cells. A cylindrical cell may have a cylindrical housing surface and two circular housing surfaces. The electrical contacts of the cylindrical cell may be provided on two opposite circular housing surfaces.

The battery cells of the battery cell assembly may be pouch cells having a flexible housing. For example, a pouch cell may be provided by two foils interconnected at their borders. The electrical contacts of a pouch cell may protrude from a border of the pouch.

It has to be noted that the battery cell assembly may comprise a mixture of prismatic cells, cylindrical cells and pouch cells. In general, all types and/or formats of battery cells may be used for the battery cell assembly.

According to an embodiment of the invention, the battery cells are separated into groups, which are electrically connected in parallel and are thermally coupled with each other via housing surfaces of battery cells of the same group. A group of battery cells may be defined in such a way that the battery cells are connected in parallel and that the battery cells are thermally coupled with each other via their housings. Such a group may be seen as subassembly of the battery cell assembly. Parallel connected battery cells may be electrically connected via their positive electrical contacts and via their negative electrical contacts.

A housing surface may be an outer side of the housing, which may be flat or curved. Thermally coupled housing surfaces are surfaces which are in contact directly or via a thermally conducting material, such that heat can be transferred between the housings.

According to an embodiment of the invention, the groups of electrically parallel connected battery cells are connected in series with each other and are thermally isolated from each other via an isolating member, which is arranged between different groups. The groups of battery cells that are connected in series may be thermally decoupled from each other. This may be achieved by using a thermally isolating interface material. The isolating member may be a foil of thermally isolating material and/or a plate of thermally isolating material.

The isolating member may be arranged between surfaces of battery cells of different groups. The surfaces of battery cells of different groups, which are thermally coupled, may face each other.

The isolating member also may be arranged between surfaces provided by the groups. Such a surface may be provided by a group housing, in which the battery cells of the group are arranged and/or a material, in which the battery cells of a group are potted. The surfaces of battery cells of different groups may face each other. The surfaces of groups, which are thermally decoupled by the thermally isolating member, may face each other.

For connecting a group of battery cells with a further group of battery cells in series, a positive electrical contact of one of the groups may be connected with a negative electrical contact of the other group.

Thermally coupled may mean that an interface between the housing surfaces has a heat transfer coefficient of more than 100 W/ (m² K). Thermally isolated may mean that an interface between the housing surfaces has a thermal conductivity of less than 50 W/ (m² K).

Since the battery cells of a group, i.e. parallel connected battery cells, are thermally coupled, temperature differences between the paralleled battery cells may be minimized. The battery cells may be thermally coupled as well as possible, e.g., by connecting the surfaces of the cells to each other or by connecting them to a common heat spreader. When one of the battery cells heats up, it also heats up the other battery cells of the group and an internal resistance of the battery cells may stay the same. This may avoid diversion in cell temperatures as described above.

The groups of battery cells, which are connected in series, are thermally isolated from each other. Battery cell temperatures in series-connected battery cells may be automatically balanced by additional losses in colder battery cells. A balancing mechanism exists which will equilibrate the temperatures of battery cells connected in series. In particular, since a total current through the battery cell assembly may be externally defined, colder battery cells connected in series with hotter battery cells may experience higher losses due to higher internal resistance. By consequence, the colder battery cells may heat more strongly than the hotter battery cells. Thermally isolating series connected groups of cells furthermore may help to avoid chain reactions during thermal runaway.

With the battery cell assembly, an effort to match parallel connected battery cells may be reduced. Furthermore, a cooling circuit connected to the battery cell assembly need not be designed as symmetrical as possible. A derating of the battery cells during design may be reduced and battery cells may be used more efficiently. This all may reduce cost for designing, manufacturing and/or maintaining the battery cell assembly. Additionally, a lifetime of the battery cell assembly may be increased.

According to an embodiment of the invention, housing surfaces of battery cells of the same group, which face each other, directly contact each other. Directly connected may mean that no material, such as air, is present between the housing surfaces. A direct contact may be formed as a pressure contact.

According to an embodiment of the invention, a thermally conducting interface material is provided between housing surfaces of battery cells of the same group. A contact between housing surfaces may be formed using a thermally conducting interface material, such as glue and/or paste. A thermally conducting interface material may be a layer, which is smaller than 1 mm, such as 0. 1 mm.

According to an embodiment of the invention, a thermally conducting member is provided between housing surfaces of battery cells of the same group. The thermally conducting member may be flexible, such as a foil, or rigid, such as a block of material. A contact between housing surfaces may be formed with thermally conducting sheet or block of material. A thermally conducting member may be made of a solid material and/or may be thicker than 0.1 mm.

According to an embodiment of the invention, the thermally conducting member is compressible. The thermally conducting member may be made of foam and/or rubber.

For example, the thermally conducting member may have thermal conductivity of more than 1 W/ (m K) and a thickness of 1 mm. Thermally coupling paralleled battery cells using a compressible, thermally conducting sheet or block of material may allow for expansion of the battery cells during operation.

On the other hand, a thermally isolating member and/or material of the same thickness may have thermal conductivity of less than 0.1 W/ (m K).

According to an embodiment of the invention, battery cells of the same group are immersed in a thermally conducting material. The battery cells may be immersed into the thermally conducting material in a liquid phase. The thermally conducting material then may or may not cure.

The battery cells of a group may be potted using a thermally conducting potting material. The potting material may be solid or gelatinous.

According to an embodiment of the invention, the thermally conducting material is solid. In such a way, the thermally conducting material also may provide a mechanical support for the battery cells.

According to an embodiment of the invention, the thermally conducting material is paste-like. In such a way, the thermally conducting material may account for an expansion of the battery cells during operation.

According to an embodiment of the invention, battery cells of the same group are interconnected via their housing surfaces with a heat spreader plate, which does not interconnect battery cells of different groups. A heat spreader plate may be a block of material, which is thermally conducting and/or which may be connected with a cooling and/or heating device. More than two battery cells may be interconnected with the heat spreader plate.

It has to be noted that the housing surfaces may be thermally coupled to the heat spreader plate as described above to another housing surface.

The housing surfaces of the battery cells may be in direct contact with the common heat spreader plate. The direct contact may be formed as a pressure contact. Also, the housing surfaces may be in contact with the heat spreader plate using a thermally conducting interface material such as glue or paste.

The housing surfaces of the battery cells may contact the common heat spreader plate using a thermally conducting member, for example in the form of a sheet, block and/or compressible block of material.

It may be that the heat spreader plate has an anisotropic thermal conductivity and/or has a better thermal conductivity in the direction in which the battery cells are mounted as compared to a parallel direction. The heat spreader plate may be a metallic body, which has isotropic thermal conductivity.

According to an embodiment of the invention, the heat spreader plate comprises and/or is interconnected with a heating and/or cooling plate comprising conducts for a cooling fluid. A heating and/or plate may be a plate through which a cooling fluid for cooling and/or heating the battery cells is conveyed.

The heat spreader plate may comprise the conducts and/or may be the cooling and/or heating plate. The groups of parallel connected battery cells may be in thermal contact with a plate for cooling/heating of the battery cells. Alternatively, the heat spreader plate may be in thermal contact with the cooling and/or heating plate.

According to an embodiment of the invention, the heat spreader plate is arranged between housing surfaces of battery cells, which face each other. Two battery cells may be arranged on opposite sides of the heat spreader plate.

These and other aspects of the invention will be apparent from and elucidated with reference to the embodiments described hereinafter.

### BRIEF DESCRIPTION OF THE DRAWINGS

The subject-matter of the invention will be explained in more detail in the following text with reference to exemplary embodiments which are illustrated in the attached drawings.
Fig. 1 schematically shows a top view of a battery cell assembly according to an embodiment of the invention.
Fig. 2 schematically shows a top view of a battery cell assembly according to a further embodiment of the invention.
Fig. 3 schematically shows a top view of a battery cell assembly according to a further embodiment of the invention.
Fig. 4 schematically shows a cross-sectional side view of a battery cell assembly according to a further embodiment of the invention.
Fig. 5 schematically shows a cross-sectional side view of a battery cell assembly according to a further embodiment of the invention.
Fig. 6 schematically shows a cross-sectional side view of a battery cell assembly according to a further embodiment of the invention.
Fig. 7 schematically shows a top view of a battery cell assembly according to a further embodiment of the invention.

The reference symbols used in the drawings, and their meanings, are listed in summary form in the list of reference symbols. In principle, identical parts are provided with the same reference symbols in the figures.

### DETAILED DESCRIPTION OF EXEMPLARY EMBODIMENTS

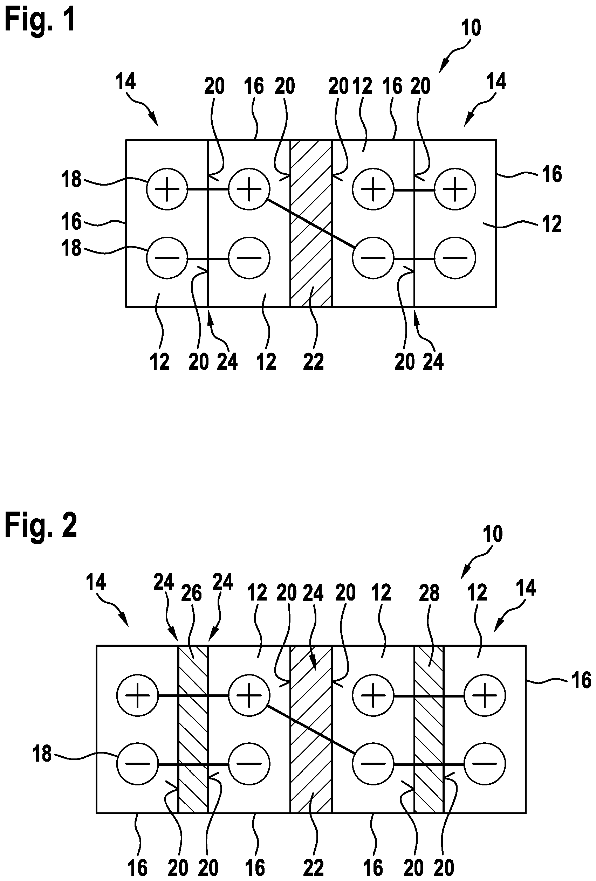

Fig. 1 shows a battery cell assembly 10 composed of battery cells 12, which are assembled into two groups 14.

As shown, the battery cells 12 may be prismatic cells, i.e. may have a prismatic housing 16. Furthermore, the battery cells 12 have electrical contacts 18 on their top side. The battery cells 12 of one group 14 are electrically connected in parallel. The groups 14 are electrically connected in series.

In Fig. 1 and the following figures, the battery cells 12 all may be mechanically connected with each other via a common frame, a press frame, a common assembly board, etc. It also may be that the battery cells 12 are attached directly to each other via gluing and/or with further means, such as screws, bolts, etc. As a further possibility, the battery cells 12 may be mechanically interconnected with each other via further components, such as thermal conducting members and thermal isolating members as described above and below.

In Fig. 1, the battery cells 12 of each group 14 are in direct contact via a side surface 20 of their housings 16. In such a way, the battery cells 12 of a group 12 are thermally coupled and their internal resistance is equalized via coupled temperatures.

The groups 14 of battery cells 12 are thermally isolated from each other with a thermally isolating member 22, which may be a thermally isolating foil, plate or block of thermally isolating plastics material. The thermally isolating member 22 may be arranged between two surfaces 20, which face each other. In such a way, the temperature of different groups 14 may be different and/or does not equalize between groups 14.

It may be that a thermally conducting interface material 24, such as thermally conducting glue or paste, is provided between the surfaces 20 of contacting battery cells 12 of a group 14.

Fig. 2 shows a further battery cell assembly 10, which is designed like the one of Fig. 1, except that a thermally conducting member 26 is provided between surfaces 20 of the battery cells 12 of one group 14. The thermally conducting member 26 may be a thermally conducting foil, a thermally conducting plate, a thermally conducting block, etc.

It may be that the thermally conducting member 26 is in contact to the surfaces 20 via a thermally conducting interface material 24, such as glue or paste.

It further may be that the thermally conducting member 26 is compressible, such as thermally conducting foam and/or thermally conducting rubber.

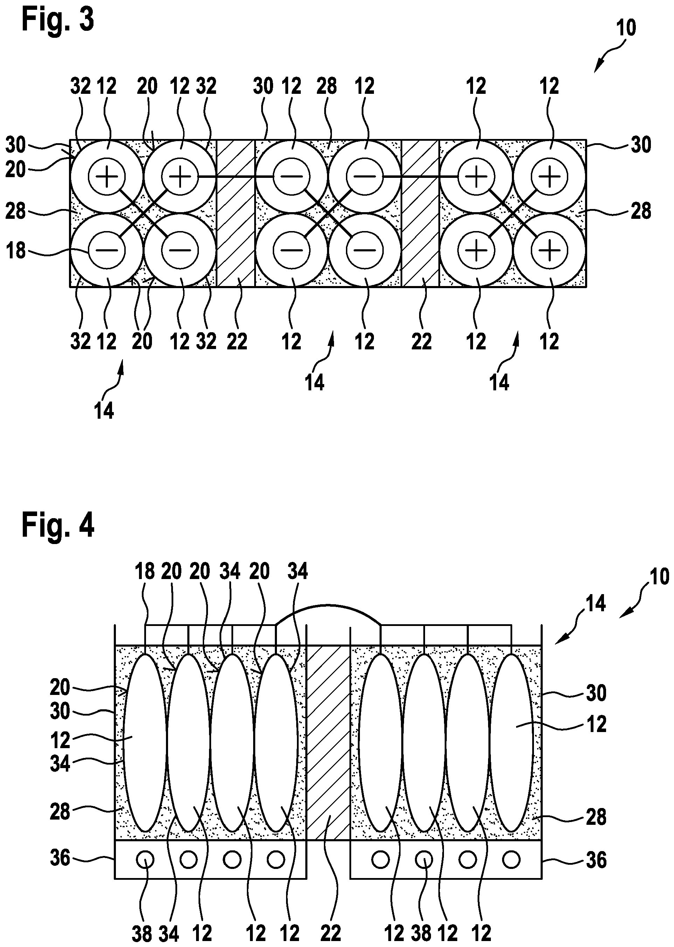

Fig. 3 shows that the battery cells 12 of one group 14 may be at least partially immersed and/or potted into a thermally conducting material 28. The thermally conducting material 28 may be solid, liquid or paste-like.

In the case of a solid thermally conducting material 28, the battery cells 12 may be potted into the material 28 to form a group 14 and then assembled to the battery cell assembly 10.

In the case of a liquid or paste-like thermally conducting material 28, the material 28 may be provided in a group housing 30, in which also the battery cells 12 are accommodated. The group housing 30 may be made of a thermally conducting material and may support the thermal coupling of the battery cells 12. Also, the group housing 30 may be made of a thermally isolating material and may be used as thermally isolating material thermally decoupling the groups 14 from each other.

As shown in Fig. 3, the battery cells 12 may be cylindrical cells. However, also prismatic cells or pouch cells may be used.

The cylindrical battery cells 12 have a cylindrical housing 32 with a cylindrical side surface 20 and a circular top and bottom surfaces. One of the electrical contacts 18 is provided at the top surface. The other electrical contact 18 is provided at the bottom surface. The battery cells 12 of one group may be arranged, such that they are aligned in parallel and/or their contacts 18 of the same polarity face to the same direction. The groups 14 may be aligned to each, such that electrical contacts 18 of the same polarity of different groups 14 face to opposite directions. This may facilitate a series connection of groups 14.

Fig. 4 shows a battery cell assembly 10 similar to the one of Fig. 3, where the battery cells 12 are pouch cells with a flexible pouch 34 as housing. Each pouch 34 may comprise two foils that are attached to each other at a border. The foils and/or the pouch 34 may be made of a thermally conducting material. The two foils provide side surfaces 20, which are used for thermally coupling the battery cells 12. On a top side of the battery cell 12, the electrical contacts 18 protrude from the pouch 34.

The pouch cells 12 may be at least partially or completely immersed in a liquid or paste-like thermally conducting material 28, since they tend to change their volume during operation.

Fig. 4 also shows that a separate cooling and/or heating plate 36 may be attached and/or in thermal contact with each group 14 of battery cells 12. The cooling and/or heating plate 36 comprises conducts 38 for a fluid, which transfers heat into the cooling and/or heating plate 36 and/or which removes heat from the cooling and/or heating plate 36. In such a way, the groups 14 of battery cells 12 may be individually cooled and/or heated.

It also may be possible that a cooling and/or heating plate 36 is used for more than one group 14 or for all groups 14.

The cooling and/or heating plate 36 may be attached to a group housing 30 as shown in Fig. 4, to a block of thermally conducting material 28, for example, as in Fig. 3 and/or directly to the housings 16, 32 of the battery cells.

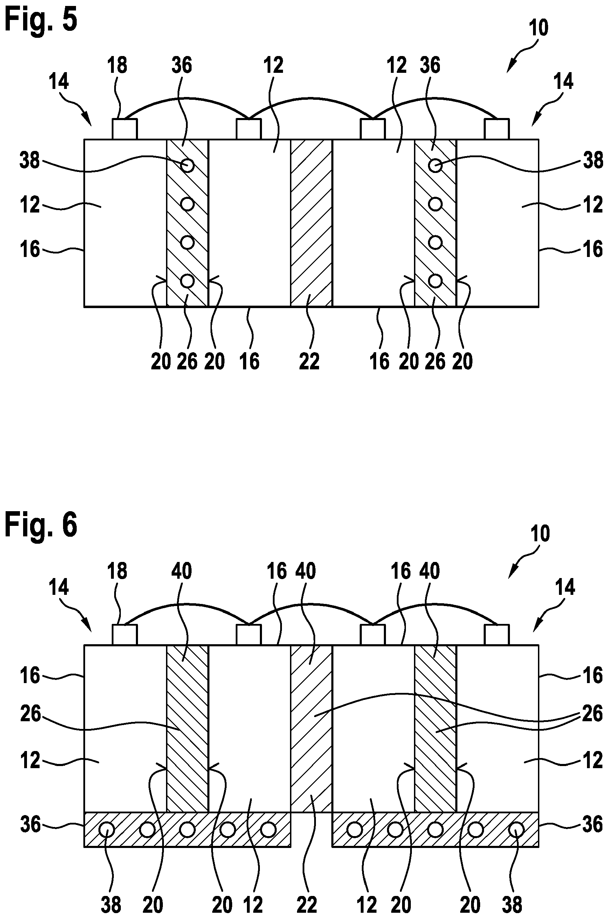

Fig. 5 shows that a cooling and/or heating plate 36 may be used as thermally conducting member 26 between battery cells 12 of a group 14. The cooling and/or heating plate 36 may be arranged between surfaces 20 of the battery cells 12, which face each other.

It may be that the corresponding battery cells 12 are mechanically interconnected via the cooling and/or heating plate 36. It may be that a thermally conducting interface material 24 is provided between the corresponding battery cell 12 and the cooling and/or heating plate 36, such as glue or paste.

Fig. 6 shows that a heat spreader plate 40 may be used for thermally coupling battery cells 12 of a group 14. The heat spreader plate 40 may be arranged between surfaces 20 of the battery cells 12, which face each other. It may be that the corresponding battery cells 12 are mechanically interconnected via the heat spreader plate 40. It may be that a thermally conducting interface material 24 is provided between the corresponding battery cell 12 and the heat spreader plate 40, such as glue or paste.

The heat spreader plate 40 may have an anisotropic thermal conductivity, wherein the thermal conductivity into a direction towards the battery cells 12 is higher than into an orthogonal direction.

The cooling and/or heating plate 36 of Fig. 5 may be seen as a heat spreader plate 40 and/or also may have an anisotropic thermal conductivity. The heat spreader plate 40 may be seen as a thermally conducting member 26.

Fig. 6 furthermore shows that a heat spreader plate 40 may be in thermal contact with a cooling and/or heating plate 36, for example a cooling and/or heating plate 36 as described with respect to Fig. 4.

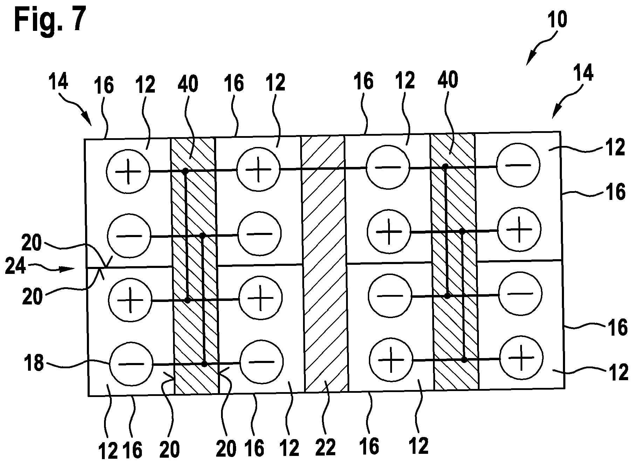

Fig. 7 shows that a heat spreader plate 40 may thermally couple more than 2 battery cells 12. Pairs of battery cells 12 may be arranged at opposite sides of the heat spreader plate 40 and/or side by side along one side of the heat spreader plate 40.

It may be that battery cells 12 on one side of the heat spreader plate 40 are thermally coupled with each other via a further housing surface 20, for example directly, via a thermally conducting interface material 24 and/or a thermally conducting member 26.

While the invention has been illustrated and described in detail in the drawings and foregoing description, such illustration and description are to be considered illustrative or exemplary and not restrictive; the invention is not limited to the disclosed embodiments. Other variations to the disclosed embodiments can be understood and effected by those skilled in the art and practising the claimed invention, from a study of the drawings, the disclosure, and the appended claims. In the claims, the word "comprising" does not exclude other elements or steps, and the indefinite article "a" or "an" does not exclude a plurality. A single processor or controller or other unit may fulfil the functions of several items recited in the claims. The mere fact that certain measures are recited in mutually different dependent claims does not indicate that a combination of these measures cannot be used to advantage. Any reference signs in the claims should not be construed as limiting the scope. The invention is limited by the appended claims.

### LIST OF REFERENCE SYMBOLS

- 10: battery cell assembly
- 12: battery cell
- 14: group of battery cells
- 16: prismatic housing
- 18: electrical contact
- 20: housing surface
- 22: thermally isolating member
- 24: thermally conducting interface material
- 26: thermally conducting member
- 28: thermally conducting material
- 30: group housing
- 32: cylindrical housing
- 34: pouch
- 36: cooling and/or heating plate
- 38: conducts
- 40: heat spreader plate

## Claims

1. A battery cell assembly (10),
wherein the battery cell assembly (10) comprises a plurality of mechanically interconnected battery cells (12);
wherein the battery cells (12) are separated into groups (14), wherein the battery cells (12) of a group (14) are electrically connected in parallel and the battery cells (12) of a group (14) are thermally coupled with each other via housing surfaces (20);
wherein the groups (14) of electrically parallel connected battery cells (12) are electrically connected in series with each other and are thermally isolated from each other via an isolating member (22), which is arranged between different groups (14).

2. The battery cell assembly (10) of claim 1,
wherein housing surfaces (20) of battery cells (12) of the same group (14), which face each other, directly contact each other.

3. The battery cell assembly (10) of claim 1 or 2,
wherein a thermally conducting interface material (24) is provided between housing surfaces (20) of battery cells (12) of the same group (14).

4. The battery cell assembly (10) of one of the previous claims,
wherein a thermally conducting member (26) is provided between housing surfaces (20) of battery cells (12) of the same group (14).

5. The battery cell assembly (10) of claim 4,
wherein the thermally conducting member (26) is compressible.

6. The battery cell assembly (10) of one of the previous claims,
wherein battery cells (12) of the same group (14) are immersed in a thermally conducting material (28).

7. The battery cell assembly (10) of claim 6,
wherein the thermally conducting material (28) is solid.

8. The battery cell assembly (10) of claim 6,
wherein the thermally conducting material (28) is paste-like.

9. The battery cell assembly (10) of claim of one of the previous claims,
wherein battery cells (12) of the same group (14) are interconnected with a heat spreader plate (40), which does not interconnect battery cells (12) of different groups (14).

10. The battery cell assembly (10) of claim 8,
wherein the heat spreader plate (40) comprises and/or is interconnected with a heating and/or cooling plate (36) comprising conducts (38) for a cooling fluid.

11. The battery cell assembly (10) of claim 8 or 9,
wherein the heat spreader plate (40) is arranged between housing surfaces (20) of battery cells (12), which face each other.

12. The battery cell assembly (10) of one of the previous claims,
wherein the isolating member (22) comprises a foil of thermally isolating material.

13. The battery cell assembly (10) of one of the previous claims,
wherein the isolating member (22) comprises a plate of thermally isolating material.

14. The battery cell assembly (10) of one of the previous claims,
wherein the battery cells (12) have a prismatic housing (16); or
wherein the battery cells (12) have a cylindrical housing (32); or
wherein the battery cells (12) are pouch cells having a flexible housing (34).

## Patentansprüche

1. Batteriezellenbaugruppe (10),
wobei die Batteriezellenbaugruppe (10) mehrere mechanisch verbundene Batteriezellen (12) umfasst; wobei die Batteriezellen (12) in Gruppen (14) separiert sind, wobei die Batteriezellen (12) einer Gruppe (14) elektrisch parallelgeschaltet sind und die Batteriezellen (12) einer Gruppe (14) über Gehäuseflächen (20) miteinander thermisch gekoppelt sind;
wobei die Gruppen (14) von elektrisch parallelgeschalteten Batteriezellen (12) miteinander elektrisch in Serie geschaltet sind und über ein Isolierglied (22), das zwischen verschiedenen Gruppen (14) angeordnet ist, voneinander thermisch isoliert sind.

2. Batteriezellenbaugruppe (10) nach Anspruch 1, wobei Gehäuseflächen (20) von Batteriezellen (12) derselben Gruppe (14), die einander zugewandt sind, einander direkt kontaktieren.

3. Batteriezellenbaugruppe (10) nach Anspruch 1 oder 2,
wobei ein thermisch leitendes Grenzflächenmaterial (24) zwischen den Gehäuseflächen (20) von Batteriezellen (12) derselben Gruppe (14) vorgesehen ist.

4. Batteriezellenbaugruppe (10) nach einem der vorhergehenden Ansprüche,
wobei ein thermisch leitendes Glied (26) zwischen den Gehäuseflächen (20) von Batteriezellen (12) derselben Gruppe (14) vorgesehen ist.

5. Batteriezellenbaugruppe (10) nach Anspruch 4, wobei das thermisch leitende Glied (26) kompressibel ist.

6. Batteriezellenbaugruppe (10) nach einem der vorhergehenden Ansprüche,
wobei Batteriezellen (12) derselben Gruppe (14) in einem thermisch leitenden Material (28) eingebettet sind.

7. Batteriezellenbaugruppe (10) nach Anspruch 6, wobei das thermisch leitende Material (28) fest ist.

8. Batteriezellenbaugruppe (10) nach Anspruch 6, wobei das thermisch leitende Material (28) pastös ist.

9. Batteriezellenbaugruppe (10) nach einem der vorhergehenden Ansprüche,
wobei Batteriezellen (12) derselben Gruppe (14) mit einer Wärmeverteilungsplatte (40) verbunden sind, die keine Batteriezellen (12) von verschiedenen Gruppen (14) verbinden.

10. Batteriezellenbaugruppe (10) nach Anspruch 8, wobei die Wärmeverteilungsplatte (40) eine Heiz- und/oder Kühlplatte (36), die Leitungen (38) für ein Kühlfluid umfasst bzw. umfassen, umfasst und/oder mit solcher bzw.
solchen verbunden ist.

11. Batteriezellenbaugruppe (10) nach Anspruch 8 oder 9,
wobei die Wärmeverteilungsplatte (40) zwischen den Gehäuseflächen (20) der Batteriezellen (12), die einander zugewandt sind, angeordnet ist.

12. Batteriezellenbaugruppe (10) nach einem der vorhergehenden Ansprüche,
wobei das Isolierglied (22) eine Folie aus thermisch isolierendem Material umfasst.

13. Batteriezellenbaugruppe (10) nach einem der vorhergehenden Ansprüche,
wobei das Isolierglied (22) eine Platte aus thermisch isolierendem Material umfasst.

14. Batteriezellenbaugruppe (10) nach einem der vorhergehenden Ansprüche,
wobei die Batteriezellen (12) ein prismatisches Gehäuse (16) aufweisen; oder
wobei die Batteriezellen (12) ein zylindrisches Gehäuse (32) aufweisen; oder
wobei die Batteriezellen (12) Pouchzellen sind, die ein flexibles Gehäuse (34) aufweisen.

## Revendications

1. Assemblage de cellules de batterie (10),
l'assemblage de cellules de batterie (10) comprenant une pluralité de cellules de batterie interconnectées mécaniquement (12) ;
les cellules de batterie (12) étant séparées en groupes (14), les cellules de batterie (12) d'un groupe (14) étant branchées électriquement en parallèle et les cellules de batterie (12) d'un groupe (14) étant couplées thermiquement les unes aux autres par le biais de surfaces de boîtier (20) ;
les groupes (14) de cellules de batterie branchées électriquement en parallèle (12) étant branchés électriquement en série les uns avec les autres et étant isolés thermiquement les uns des autres par le biais d'un élément isolant (22), qui est disposé entre différents groupes (14).

2. Assemblage de cellules de batterie (10) de la revendication 1,
dans lequel des surfaces de boîtier (20) de cellules de batterie (12) du même groupe (14), qui se font face, sont en contact direct les unes avec les autres.

3. Assemblage de cellules de batterie (10) de la revendication 1 ou 2,
dans lequel un matériau d'interface thermiquement conducteur (24) est disposé entre des surfaces de boîtier (20) de cellules de batterie (12) du même groupe (14).

4. Assemblage de cellules de batterie (10) d'une des revendications précédentes,
dans lequel un élément thermiquement conducteur (26) est disposé entre des surfaces de boîtier (20) de cellules de batterie (12) du même groupe (14).

5. Assemblage de cellules de batterie (10) de la revendication 4,
dans lequel l'élément thermiquement conducteur (26) est compressible.

6. Assemblage de cellules de batterie (10) d'une des revendications précédentes,
dans lequel des cellules de batterie (12) du même groupe (14) sont plongées dans un matériau thermiquement conducteur (28).

7. Assemblage de cellules de batterie (10) de la revendication 6,
dans lequel le matériau thermiquement conducteur (28) est solide.

8. Assemblage de cellules de batterie (10) de la revendication 6,
dans lequel le matériau thermiquement conducteur (28) est en forme de pâte.

9. Assemblage de cellules de batterie (10) d'une des revendications précédentes,
dans lequel des cellules de batterie (12) du même groupe (14) sont interconnectées avec une plaque de dissipation thermique (40), qui n'interconnecte pas des cellules de batterie (12) de différents groupes (14).

10. Assemblage de cellules de batterie (10) de la revendication 8,
dans lequel la plaque de dissipation thermique (40) comprend et/ou est interconnectée avec une plaque chauffante et/ou réfrigérante (36) comprenant des conduites (38) pour un fluide réfrigérant.

11. Assemblage de cellules de batterie (10) de la revendication 8 ou 9,
dans lequel la plaque de dissipation thermique (40) est disposée entre des surfaces de boîtier (20) de cellules de batterie (12) qui se font face.

12. Assemblage de cellules de batterie (10) d'une des revendications précédentes,
dans lequel l'élément isolant (22) comprend une feuille de matériau thermiquement isolant.

13. Assemblage de cellules de batterie (10) d'une des revendications précédentes,
dans lequel l'élément isolant (22) comprend une plaque de matériau thermiquement isolant.

14. Assemblage de cellules de batterie (10) d'une des revendications précédentes,
dans lequel les cellules de batterie (12) ont un boîtier prismatique (16) ; ou
dans lequel les cellules de batterie (12) ont un boîtier cylindrique (32) ; ou
dans lequel les cellules de batterie (12) sont des cellules en forme de poche ayant un boîtier souple (34).
